# EUROPÄISCHE PATENTSCHRIFT

(11) **EP 3 941 805 B1**
(45) Veröffentlichungstag und Bekanntmachung des Hinweises auf die Patenterteilung: **22.01.2025**
(21) Anmeldenummer: 20712348.0
(22) Anmeldetag: 19.03.2020
(51) Int. Cl.: B62D 29/00, B29C 44/18, B60R 13/08, G10K 11/16, B62D 25/00

(54) **DÄMMELEMENT**
INSULATION ELEMENT
ÉLÉMENT ISOLANT

(30) Priorität: 22.03.2019 EP 19164685
(43) Veröffentlichungstag der Anmeldung: 26.01.2022
(73) Patentinhaber: Sika Technology AG, 6340 Baar (CH)
(72) Erfinder: SAINT MEDAR, Gino, 1180 Uccle (BE); HENRION, Didier, 1800 Vilvoorde (BE); DIMITRI, Marcq, 1480 Tubize (BE)
(74) Vertreter: Sika Patent Attorneys
(86) Internationale Anmeldenummer: PCT/EP2020/057708
(87) Internationale Veröffentlichungsnummer: WO 2020/193381

(56) Entgegenhaltungen:
- WO-A1-2017/182606
- WO-A1-98/36944
- JP-A- 2000 238 589
- US-A- 5 766 719
- US-A- 5 904 024
- US-A1- 2004 124 553

## Beschreibung

Die Erfindung betrifft ein Dämmelement zur Dämmung eines Strukturelementes in einem Kraftfahrzeug.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

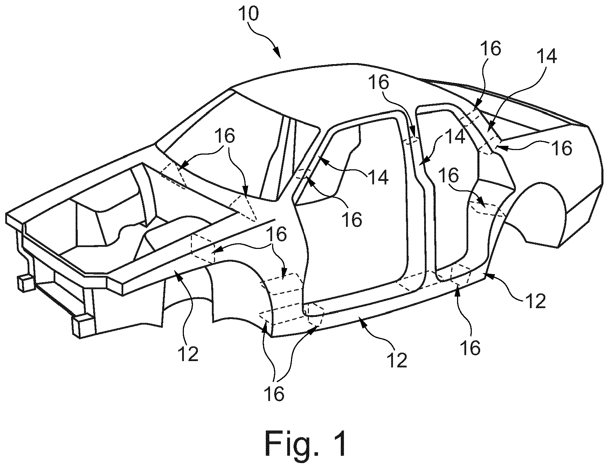

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Aus US 5766719 ist ein Abdichtungselement bekannt, welches einen sandwichartigen Aufbau aufweist. Weitere Dämmelemente sind unter anderem aus JP2000238589A bekannt.

Nachteilig an den bisher bekannten Abdichtungs- und/oder Verstärkungselementen ist es, dass für jede Karosserieform und für jeden Hohlraum einer Karosserie ein individuell angepasstes Element hergestellt werden muss. Dies führt zu hohen Entwicklungs- und Herstellungskosten und ist insbesondere bei kleineren Fahrzeugserien nachteilhaft.

Es ist daher eine Aufgabe der vorliegenden Erfindung, ein verbessertes Dämmelement zur Dämmung eines Strukturelementes in einem Kraftfahrzeug zur Verfügung zu stellen, welches die Nachteile des Standes der Technik vermeidet. Das Dämmelement soll insbesondere wirtschaftliche Vorteile bei Kleinserien mit sich bringen und insgesamt einen Entwicklungs- und Herstellungsaufwand der Dämmelemente reduzieren.

Diese Aufgabe wird gelöst durch ein Dämmelement zur Dämmung eines Strukturelementes in einem Kraftfahrzeug, nach Anspruch 1.

Diese Lösung hat den Vorteil, dass dadurch ein Dämmelement zur Verfügung gestellt wird, welches eine sehr effiziente Ausschäumung von Hohlräumen gewährleistet. Durch die sandwichartige Bauweise wird das expandierbare Material bei der Expansion bereits in eine gewünschte Richtung gelenkt. Rippen, welche zwischen den Wänden angeordnet sind, verbessern nun diesen richtungsleitenden Effekt weiter. Zum einen kanalisieren die Rippen die Expansion in Längsrichtung der Rippen, das heisst im Wesentlichen über die zweite Kante der Wände hinaus, was wünschenswert ist, weil in dieser Richtung oftmals der grösste Spalt zwischen Träger und Strukturelement überwunden werden muss. Weiterhin bewirken die Rippen, dass das expandierbare Material sich beim Expansionsvorgang an diesen beiden Rippen abstützen kann. Je nach räumlicher Ausrichtung des Dämmelementes kann es nämlich vorkommen, dass die Expansion durch die Schwerkraft in eine ungewünschte Richtung abgelenkt wird. Dabei gewährleisten die Rippen ein möglichst stabiles Expansionsverhalten in die gewünschten Richtung, unabhängig von der räumlichen Orientierung des Dämmelementes.

Ein Kerngedanke der vorliegenden Erfindung besteht insbesondere darin, dass durch ein standardisiertes Dämmelement eine Vielzahl von verschieden geformten Hohlräumen gedämmt werden kann. Durch die verbesserte Führung des Expansionsvorgangs durch die Wände und durch die Rippen wird erreicht, dass durch das hier vorgeschlagene Dämmelement auch Hohlräume ausgedämmt werden können, welche grössere Lücken zwischen dem Träger und dem Strukturelement aufweisen. Aus diesem Grund kann das hier vorgeschlagene Dämmelement sowohl für Strukturelemente mit grossen Lücken als auch für Strukturelemente mit kleinen Lücken zwischen Träger und Strukturelement eingesetzt werden. Dies bietet den Vorteil, dass das Dämmelement in hoher Stückzahl produziert werden kann, was vorteilhaft ist in Hinblick auf Werkzeugkosten und Entwicklungskosten. Insbesondere bei Spritzgussverfahren ist eine hohe Stückzahl notwendig, um kosteneffizient produzieren zu können.

Die Bezeichnung "Dämmelement" bzw. "Dämmung" bzw. "gedämmt" umfasst im Zusammenhang mit dieser Erfindung Elemente bzw. Strukturen bzw. Verfahrensschritte zur Abschottung und/oder Verschliessung und/oder Verstärkung und/oder Dämmung eines Strukturelementes. Diese verschiedenen Eigenschaften eines solchen Dämmelementes können dabei einzeln oder aber in Kombination miteinander auftreten.

In einer beispielhaften Ausführungsform sind die Wände im Wesentlichen viereckig und/oder rechteckig ausgebildet.

Eine solche Ausgestaltung der Wände hat den Vorteil, dass dadurch ein kompaktes Dämmelement geschaffen werden kann, welches im Wesentlichen eine quaderförmige Gesamtform aufweist. Durch eine solche Form kann eine Vielzahl von Hohlräumen in Strukturelementen gedämmt werden.

In einer alternativen Ausführungsform haben die Wände einen im Wesentlichen runden, vieleckigen, ovalen oder unregelmässigen Grundriss.

In einer beispielhaften Ausführungsform sind die Wände im Wesentlichen flach ausgebildet.

Im Wesentlichen flache Wände bieten den Vorteil, dass dadurch die Richtung des expandierbaren Materials bei dessen Expansion optimal in Querschnittsrichtung des Strukturelementes geleitet werden kann.

In einer beispielhaften Ausführungsform erstrecken sich die Rippen im Wesentlichen orthogonal zu den ersten Kanten und/oder zu den zweiten Kanten.

Eine solche Ausrichtung der Rippen hat den Vorteil, dass dadurch das expandierbare Material bei dessen Expansion effizient in eine Richtung hin zu einer Wand des Strukturelementes geleitet wird, welche eine Wand des Strukturelementes, an welcher das Dämmelement fixiert ist, entgegengesetzt ist. Dadurch kann ein grosser Abstand zwischen Dämmelement und gegenüberliegender Wand des Strukturelementes überbrückt werden. Zudem hat eine solche Ausrichtung der Rippen den Vorteil, dass dadurch bei vertikal verlaufenden Wänden des Strukturelementes eine Abstützung des Materials entgegen einer Wirkung der Schwerkraft erzielt wird.

In einer alternativen Ausführungsform erstrecken sich die Rippen in einem Winkel relativ zu einer Orthogonalen zu den ersten Kanten und/oder zweiten Kanten, wobei der Winkel 0° bis 30° oder 5° bis 25° oder 5° bis 20° beträgt.

Dabei können die Rippen so angewinkelt sein, dass sie im Wesentlichen parallel ausgerichtet sind, oder aber die Rippen können so ausgerichtet sein, dass sie in einem Winkel zueinander angeordnet sind. Dabei ist insbesondere ein Winkel zwischen den Rippen vorteilhaft, welcher in Richtung der ersten Kante zuläuft und welcher sich in Richtung der zweiten Kante öffnet.

In einer beispielhaften Ausführungsform sind die Rippen jeweils zumindest 60% oder 70% oder 80% oder 90% so lang, wie eine gesamte Distanz zwischen den ersten Kanten und den zweiten Kanten in Richtung der Rippen.

Erfindungsgemäss unterteilen die Rippen ein Volumen zwischen den beiden Wänden derart, dass zwischen 35% und 65% dieses Volumen zwischen den Rippen angeordnet ist.

Dabei ist diese Unterteilung des Volumens zwischen den beiden Wänden so zu verstehen, dass Rippen bzw. falls notwendig deren Verlängerung hergenommen wird, um das Volumen zu unterteilen.

Je nachdem, ob eine Expansion verstärkt in Richtung der Rippen geführt werden soll oder verstärkt quer zu einer Richtung der Rippen, kann das Volumen durch die Rippen anders eingeteilt werden.

Erfindungsgemäss reichen die Rippen im Wesentlichen bis zu den ersten Kanten der Wände, sind jedoch durch einen Abstand von den zweiten Kanten der Wände beabstandet.

Erfindungsgemäss beträgt dieser Abstand zumindest 15% einer Länge der Rippen.

In einer beispielhaften Ausführungsform ist das expandierbare Material auf 50% bis 95% oder auf 60% bis 95% oder auf 70% bis 90% einer Grundfläche der Wände angeordnet.

Dabei kann eine Menge des expandierbaren Materials bzw. eine Anordnung auf den Wänden des expandierbaren Materials in Abhängigkeit der Expansionsrate und in Abhängigkeit der Grösse des Hohlraums des Strukturelementes individuell angepasst werden, ohne dass dabei der Träger des Dämmelementes verändert werden muss.

Erfindungsgemäss ist jeweils ein Bereich der Wände unmittelbar an den zweiten Kanten frei von expandierbarem Material.

In einer beispielhaften Ausführungsform ist an zumindest einer der ersten Kanten eine Rippe angeordnet, welche sich im Wesentlichen senkrecht zu den Wänden erstreckt.

In einer beispielhaften Weiterbildung sind an beiden ersten Kanten solche Rippen angeordnet.

In einer beispielhaften Weiterbildung ist diese Rippe bzw. sind diese Rippen derart dimensioniert und angeordnet, dass dadurch ein Querschnitt einer Öffnung zwischen den beiden ersten Kanten in einem Vergleich zu einer Situation ohne Rippe(n) um zumindest 10% oder zumindest 20% oder zumindest 30% oder zumindest 40% oder zumindest 50% verkleinert wird.

In einer beispielhaften Weiterbildung erstreckt sich diese Rippe bzw. erstrecken sich diese Rippen über eine gesamte Länge der ersten Kante(n).

Solche Rippen an den ersten Kanten haben den Vorteil, dass dadurch eine Expansionsrichtung vermehrt weg von der Öffnung zwischen den ersten Kanten gelenkt werden kann, was je nach Anwendung vorteilhaft sein kann.

In einer beispielhaften Ausführungsform ist das Befestigungselement als Clip ausgebildet.

In einer beispielhaften Ausführungsform ist das Befestigungselement einstückig und/oder aus demselben Material wie der Träger ausgebildet.

In einer beispielhaften Ausführungsform umfasst das Dämmelement Distanzelemente, welche das Dämmelement am Strukturelement abstützen, wenn das Dämmelement durch das Befestigungselement am Strukturelement befestigt ist.

Solche Distanzelemente haben den Vorteil, dass dadurch eine Position des Dämmelementes im Strukturelement genauer definiert werden kann.

In einer beispielhaften Weiterbildung ist je ein Distanzelement auf einer Seite des Befestigungselementes angeordnet.

In einer weiteren beispielhaften Weiterbildung sind die Distanzelemente flexibel ausgebildet.

Als expandierbares Material können grundsätzlich verschiedene Materialien eingesetzt werden, welche zur Schäumung gebracht werden können. Das Material kann dabei Verstärkungseigenschaften aufweisen oder auch nicht. Typischerweise wird das expandierbare Material thermisch, durch Feuchtigkeit oder durch elektromagnetische Strahlung zur Expansion gebracht.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.

Geeignete Treibmittel sind beispielsweise auch kommerziell erhältlich unter dem Handelsnamen Expancel^{®} von der Firma Akzo Nobel, Niederlande, oder unter dem Handelsnamen Celogen^{®} von der Firma Chemtura Corp., USA.

Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 250°C, insbesondere von 100°C bis 250°C, bevorzugt von 120°C bis 240°C, bevorzugt von 130°C bis 230°C schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon^{®} BF 1350 und Vestagon^{®} BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschrieben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle^{®} 240, SikaBaffleO 250 oder SikaBaffleO 255 von der Sika Corp., USA, vertrieben und sind in den Patenten US 5,266,133 und US 5,373,027 beschrieben. Solche expandierbaren Materialien sind für die vorliegende Erfindung besonders bevorzugt.

Als expandierbare Materialien mit Verstärkungseigenschaften sind beispiels-weise diejenigen bevorzugt, welche unter dem Handelsnamen SikaReinforcer^{®} 941 von der Sika Corp., USA, vertrieben werden. Diese sind beschrieben in US 6,387,470.

Erfindungsgemäss hat das expandierbare Material eine Expansionsrate von 1000% bis 4000%, besonders bevorzugt von 1500% bis 3000%.Expandierbare Materialien mit solchen Expansionsraten bieten den Vorteil, dass dadurch eine zuverlässige Abdichtung bzw. Dämmung des Strukturelementes gegen Flüssigkeiten und Schall erreicht werden kann.

In einer beispielhaften Ausführungsform ist das expandierbare Material als temperaturinduziertes Material ausgebildet.

Dies hat den Vorteil, dass dadurch der Ofen zur Einbrennung der Tauchlackierungsflüssigkeit benutzt werden kann, um das expandierbare Material zu expandieren und um dadurch den Hohlraum zu dämmen. Somit ist kein zusätzlicher Arbeitsschritt notwendig.

Der Träger kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann der Träger einen beliebigen Aufbau und eine beliebige Struktur aufweisen. Es kann beispielsweise massiv, hohl, oder geschäumt sein oder eine gitterartige Struktur aufweisen. Die Oberfläche des Trägers kann typischerweise glatt, rau oder strukturiert sein.

Bei Dämmelementen, bei welchen sich das expandierbare Material auf einem Träger befindet, unterscheidet sich das Herstellungsverfahren dementsprechend, ob der Träger aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall der Träger, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht der Träger aus einem Material, welches sich nicht durch das Spritzgussverfahren herstellen lässt, also beispielsweise aus einem Metall, wird der Träger in ein entsprechendes Werkzeug gelegt und das expandierbare Material wird an den Träger angespritzt. Selbstverständlich besteht auch die Möglichkeit das expandierbare Material durch spezielle Befestigungsmittel oder -verfahren an dem Träger zu befestigen.

Weiterhin können Träger auch durch andere Verfahren hergestellt werden, beispielsweise durch Extrusion.

Die eingangs gestellte Ausgabe wird zudem gelöst durch ein System in einem Kraftfahrzeug, das System umfassend: ein Strukturelement, welches einen Hohlraum hat; und ein Dämmelement gemäss obiger Beschreibung; wobei das Dämmelement im Hohlraum des Strukturelementes angeordnet ist.

In einer beispielhaften Ausführungsform ist das Strukturelement ein Abschnitt einer Säule oder eines Trägers oder einer Verstrebung einer Karosserie eines Kraftfahrzeugs.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie;
- Fig. 2: eine schematische Darstellung eines beispielhaften Trägers;
- Fig. 3: eine schematische Darstellung eines beispielhaften Dämmelementes;
- Fig. 4a bis 4c: eine schematische Darstellung eines beispielhaften Dämmelementes;
- Fig. 5: eine schematische Darstellung eines beispielhaften Dämmelementes; und
- Fig. 6: eine schematische Darstellung eines beispielhaften Dämmelementes.

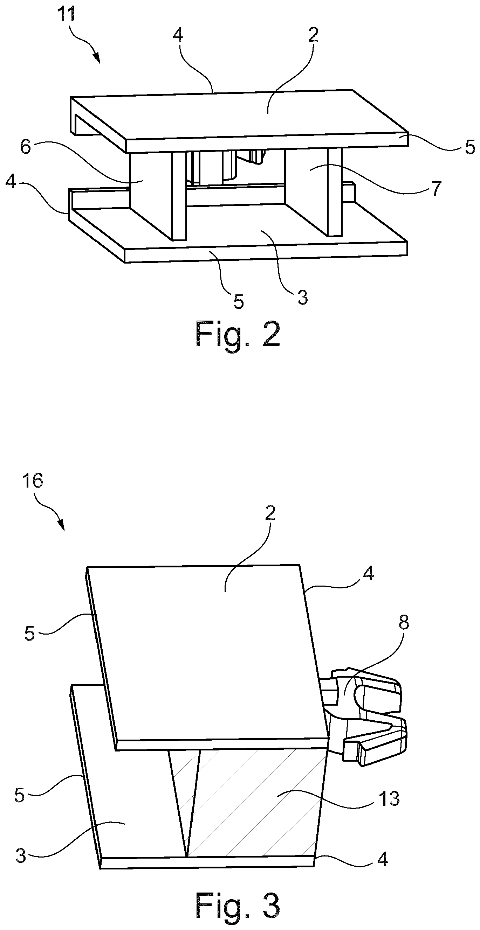

In Fig. 2 ist schematisch und beispielhaft ein Träger 11 dargestellt. Der Träger 11 hat eine erste Wand 2 und eine zweite Wand 3, welche im Wesentlichen deckungsgleich ausgestaltet und angeordnet sind. Die beiden Wände 2, 3 haben jeweils eine erste Kante 4 und eine zweite Kante 5. Zwischen der ersten Wand 2 und der zweiten Wand 3 sind eine erste Rippe 6 und eine zweite Rippe 7 angeordnet. Diese Rippen 6, 7 erstrecken sich jeweils zwischen den ersten Kanten 4 und den zweiten Kanten 5 der Wände 2, 3. Dabei sind die Rippen 6, 7 jeweils zumindest halb so lang wie eine gesamte Distanz zwischen den ersten Kanten 4 und den zweiten Kanten 5 in Richtung der Rippen 6, 7.

In diesem Ausführungsbeispiel haben die Wände 2, 3 einen viereckigen Grundriss und sind flach ausgebildet. Zudem haben die Wände in diesem Ausführungsbeispiel an den jeweils ersten Kanten 4 eine Rippe, welche sich senkrecht zu den Wänden 2, 3 erstreckt.

In Fig. 3 ist ein schematisch und beispielhaft dargestelltes Dämmelement 16 gezeigt. Der Träger umfasst wiederum eine erste Wand 2 und eine zweite Wand 3, welche jeweils eine erste Kante 4 und eine zweite Kante 5 haben. Zwischen den Wänden 2, 3 ist nun das expandierbare Material 13 angeordnet. Die Rippen sind auf dieser Darstellung nicht ersichtlich, weil sie in diesem Ausführungsbeispiel vollständig vom expandierbaren Material 13 umschlossen sind. Das Dämmelement 16 umfasst weiterhin ein Fixierungselement 8, welches in einem Bereich der ersten Kanten 4 der Wände 2, 3 angeordnet ist. In diesem Ausführungsbeispiel ist das Fixierungselement 8 als Clip ausgebildet.

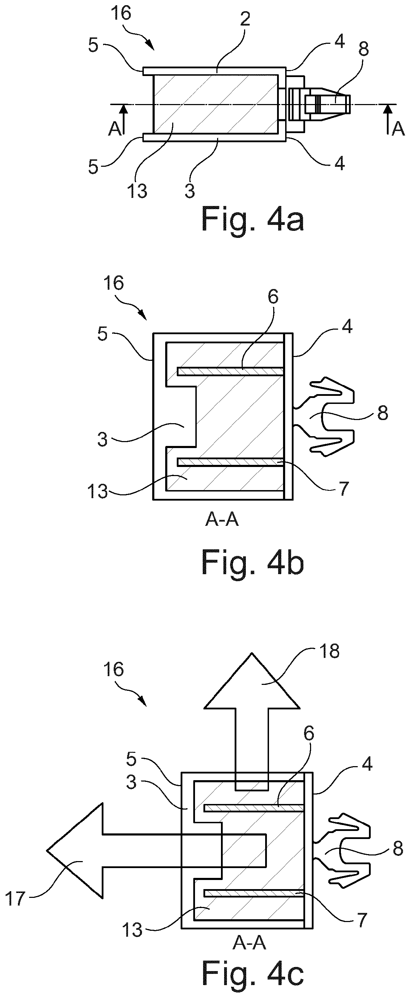

In den Fig. 4a bis 4c ist ein weiteres beispielhaftes Dämmelement 16 schematisch dargestellt. Dabei ist das Dämmelement 16 in Fig. 4a in einer Seitenansicht gezeigt, und in den Fig. 4b und 4c ist dasselbe Dämmelement 16 dann entlang der Schnittlinie A-A der Fig. 4A dargestellt.

In der Schnittdarstellung der Fig. 4b ist ersichtlich, dass das expandierbare Material 13 zu beiden Seiten der Rippen 6, 7 angeordnet ist.

In der Schnittdarstellung der Fig. 4c sind zudem eine erste Richtung 17 und eine zweite Richtung 18 dargestellt. Durch die spezifische Anordnung der Rippen 6, 7 wird das expandierbare Material 13 bei dessen Expansion verstärkt in die erste Richtung 17 geführt, indem ein Kanaleffekt zwischen den Rippen 6, 7 entsteht. Dadurch kann das expandierbare Material 13 weiter in die erste Richtung expandieren, als dies ohne Rippen 6, 7 der Fall wäre.

Bei einer horizontalen Ausrichtung des Strukturelementes (nicht dargestellt) kann das Dämmelement 16 so im Raum orientiert werden, wie in Fig. 4c gezeigt. In einem solchen Fall stützen die Rippen 6, 7, in diesem Ausführungsbeispiel die erste Rippe 6, eine Expansion des expandierbare Materials 13 in die zweite Richtung 18. In solchen Situationen besteht nämlich das Problem, dass durch die Schwerkraft das expandierbare Material 13 bei dessen Expansion ungewünscht abgelenkt werden kann. Rippe 6 bietet nun für diesen Fall eine Stütze für das expandierbare Material 13, so dass das expandierbare Material 13 weiter in die zweite Richtung 18 expandieren kann, als dies ohne erste Rippe 6 der Fall wäre.

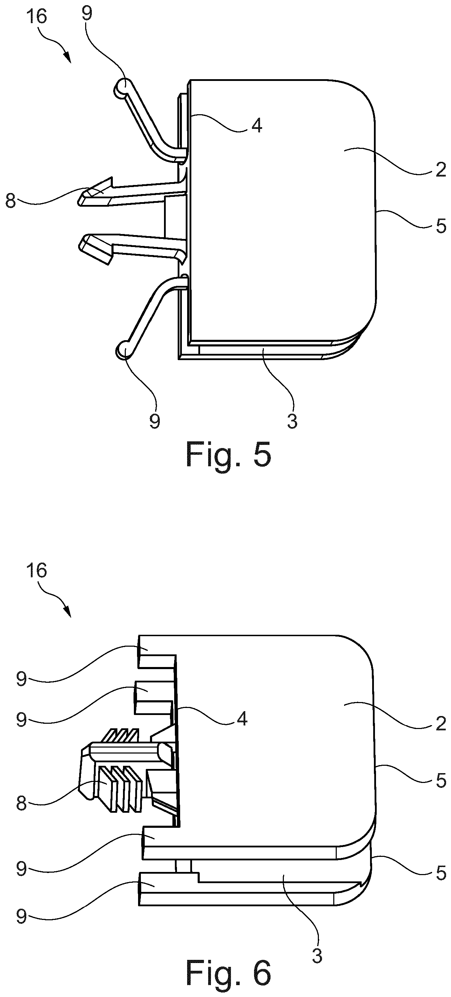

In den Fig. 5 und 6 sind zwei weitere beispielhafte Ausführungsformen von Dämmelementen 16 schematisch dargestellt. In diesen Ausführungsbeispielen weist das Dämmelement 16 zusätzlich Distanzelemente 9 auf. In Fig. 5 sind diese Distanzelemente 9 jeweils zu beiden Seiten des Fixierungselementes 8 angeordnet. Und in Fig. 6 sind diese Distanzelemente 9 jeweils als Fortsätze der ersten Wand 2 und der zweiten Wand 3 im Bereich der ersten Kante 4 ausgebildet. Bei diesen Ausführungsbeispielen sind jeweils die Rippen und auch das expandierbare Material nicht sichtbar.

### Bezugszeichenliste

- 2: erste Wand
- 3: zweite Wand
- 4: erste Kante
- 5: zweite Kante
- 6: erste Rippe
- 7: zweite Rippe
- 8: Fixierungselement
- 9: Distanzelement
- 10: Karosserie
- 11: Träger
- 12: Strukturelement
- 13: expandierbares Material
- 14: Strukturelement
- 16: Dämmelement
- 17: erste Richtung
- 18: zweite Richtung

## Patentansprüche

1. Dämmelement (16) zur Dämmung eines Strukturelementes (12, 14) in einem Kraftfahrzeug, das Dämmelement (16) umfassend:
einen Träger (11) mit einer ersten Wand (2) und einer zweiten Wand (3),
wobei die Wände (2, 3) im Wesentlichen deckungsgleich ausgestaltet und angeordnet sind, und
wobei die Wände (2, 3) jeweils sich gegenüberliegende erste Kanten (4) und zweite Kanten (5) haben, und
mit einer ersten Rippe (6) und einer zweiten Rippe (7),
wobei die Rippen (6, 7) zwischen den Wänden (2, 3) angeordnet sind, und
wobei sich die Rippen (6, 7) jeweils zwischen der ersten Kante (4) und der zweiten Kante (5) erstrecken,
wobei die Rippen (6, 7) jeweils zumindest halb so lang sind wie eine gesamte Distanz zwischen den ersten Kanten (4) und den zweiten Kanten (5) in Richtung der Rippen (6, 7);
ein expandierbares Material (13), welches zwischen den Wänden (2, 3) angeordnet ist, und welches jeweils zu beiden Seiten der Rippen (6, 7) angeordnet ist; und
ein Fixierungselement (8) zur Fixierung des Dämmelementes (16) im Strukturelement (12, 14),
wobei das Fixierungselement (8) in einem Bereich der ersten Kanten (4) der Wände (2, 3) angeordnet ist;
wobei, dass die Rippen (6, 7) ein Volumen zwischen den beiden Wänden (2, 3) derart unterteilen, dass zwischen 35% und 65% dieses Volumens zwischen den Rippen (6, 7) angeordnet ist, und
wobei die Rippen (6, 7) im Wesentlichen bis zu den ersten Kanten (4) der Wände (2, 3) reichen, jedoch durch einen Abstand von den zweiten Kanten (5) der Wände (2, 3) beabstandet sind, wobei dieser Abstand zumindest 15% einer Länge der Rippen (6, 7) beträgt, **dadurch gekennzeichnet,**
**dass** das expandierbare Material (13) eine **Expansionsrate** von 1000% bis 4000% hat, und
**dass** jeweils ein Bereich der Wände (2, 3) unmittelbar an den **zweiten Kanten** (5) frei ist von expandierbarem Material (13).

2. Dämmelement (16) nach Anspruch 1, wobei die Wände (2, 3) im Wesentlichen viereckig und/oder rechteckig und/oder flach ausgebildet sind.

3. Dämmelement (16) nach einem der vorhergehenden Ansprüche, wobei sich die Rippen (6, 7) im Wesentlichen orthogonal zu den ersten Kanten (4) und/oder zweiten Kanten (5) erstrecken.

4. Dämmelement (16) nach einem der Ansprüche 1 oder 2, wobei sich die Rippen (6, 7) in einem Winkel relativ zu einer Orthogonalen zu den ersten Kanten (4) und/oder zweiten Kanten (5) erstrecken, wobei der Winkel 0° bis 30° oder 5° bis 25° oder 5° bis 20° beträgt.

5. Dämmelement (16) nach einem der vorhergehenden Ansprüche, wobei die Rippen (6, 7) jeweils zumindest 60% oder 70% oder 80% oder 90% so lang sind wie eine gesamte Distanz zwischen den ersten Kanten (4) und den zweiten Kanten (5) in Richtung der Rippen (6, 7).

6. Dämmelement (16) nach einem der vorhergehenden Ansprüche, wobei die Rippen (6, 7) ein Volumen zwischen den beiden Wänden (2, 3) derart unterteilen, dass zwischen 40% und 60% dieses Volumens zwischen den Rippen (6, 7) angeordnet ist.

7. Dämmelement (16) nach einem der vorhergehenden Ansprüche, wobei das expandierbare Material (13) auf 50% bis 95%, oder 60% bis 95%, oder 70% bis 90% einer Grundfläche der Wände (2, 3) angeordnet ist.

8. Dämmelement (16) nach einem der vorhergehenden Ansprüche, wobei das Fixierungselement (8) als Clip ausgebildet ist, und/oder wobei das Fixierungselement (8) einstückig mit dem Träger (11) ausgebildet ist.

9. Dämmelement (16) nach einem der vorhergehenden Ansprüche, wobei das Dämmelement (16) eines oder mehrere Distanzelemente (9) umfasst, welche das Dämmelement (16) am Strukturelement (12, 14) abstützen, wenn das Dämmelement (16) durch das Fixierungselement (8) am Strukturelement (12, 14) befestigt ist.

10. Dämmelement (16) nach Anspruch 9, wobei je ein Distanzelement (9) auf einer Seite des Fixierungselementes (8) angeordnet ist, und/oder wobei die Distanzelemente (9) flexibel ausgebildet sind.

11. System in einem Kraftfahrzeug, das System umfassend:
ein Strukturelement (12, 14), welches einen Hohlraum hat; und
ein Dämmelement (16) nach einem der Ansprüche 1 bis 10;
wobei das Dämmelement (16) im Hohlraum des Strukturelementes (12, 14) angeordnet ist.

## Claims

1. Insulating element (16) for insulating a structural element (12, 14) in a motor vehicle, the insulating element (16) comprising:
a carrier (11) with a first wall (2) and a second wall (3),
wherein the walls (2, 3) are designed and disposed so as to be substantially congruent, and
wherein the walls (2, 3) each have opposite first edges (4) and second edges (5), and
with a first rib (6) and a second rib (7),
wherein the ribs (6, 7) are disposed between the walls (2, 3), and wherein the ribs (6, 7) each extend between the first edge (4) and the second edge (5),
wherein the ribs (6, 7) each are at least half as long as a total distance between the first edges (4) and the second edges (5) in the direction of the ribs (6, 7);
an expandable material (13) which is disposed between the walls (2, 3) and which is in each case disposed on both sides of the ribs (6, 7); and
a fixing element (8) for fixing the insulating element (16) in the structural element (12, 14),
wherein the fixing element (8) is disposed in a region of the first edges (4) of the walls (2, 3) ;
wherein the ribs (6, 7) subdivide a volume between the two walls (2, 3) in such a manner that between 35% and 65% of this volume is disposed between the ribs (6, 7); and
wherein the ribs (7) extend substantially up to the first edges (4) of the walls (2, 3), but are spaced apart from the second edges (5) of the walls (2, 3) by a spacing, wherein this spacing is at least 15% of a length of the ribs (6, 7), **characterized**
**in that** the expandable material (13) has an **expansion rate** of 1000% to 4000%; and
**in that** one region of the walls (2, 3) directly on the **second edges** (5) is in each case free of expandable material (13).

2. Insulating element (16) according to Claim 1, wherein the walls (2, 3) are configured so as to be substantially quadrangular and/or rectangular and/or flat.

3. Insulating element (16) according to one of the preceding claims, wherein the ribs (6, 7) extend so as to be substantially orthogonal to the first edges (4) and/or second edges (5).

4. Insulating element (16) according to one of Claims 1 or 2, wherein the ribs (6, 7) extend at an angle relative to an orthogonal to the first edges (4) and/or second edges (5), wherein the angle is 0° to 30°, or 5° to 25°, or 5° to 20°.

5. Insulating element (16) according to one of the preceding claims, wherein the ribs (6, 7) are in each case at least 60% or 70% or 80% or 90% as long as a total distance between the first edges (4) and the second edges (5) in the direction of the ribs (6, 7).

6. Insulating element (16) according to one of the preceding claims, wherein the ribs (6, 7) subdivide a volume between the two walls (2, 3) in such a manner that between 40% and 60% of this volume is disposed between the ribs (6, 7).

7. Insulating element (16) according to one of the preceding claims, wherein the expandable material (13) is disposed on 50% to 95%, or 60% to 95%, or 70% to 90%, of a base area of the walls (2, 3).

8. Insulating element (16) according to one of the preceding claims, wherein the fixing element (8) is designed as a clip, and/or wherein the fixing element (8) is configured so as to be integral to the carrier (11).

9. Insulating element (16) according to one of the preceding claims, wherein the insulating element (16) comprises one or a plurality of spacer elements (9) which support the insulating element (16) on the structural element (12, 14) when the insulating element (16) is fastened to the structural element (12, 14) by way of the fixing element (8).

10. Insulating element (16) according to Claim 9, wherein one spacer element (9) is in each case disposed on one side of the fixing element (8), and/or wherein the spacer elements (9) are configured so as to be flexible.

11. System in a motor vehicle, the system comprising:
a structural element (12, 14) which has a cavity; and
an insulating element (16) according to one of Claims 1 to 10;
wherein the insulating element (16) is disposed in the cavity of the structural element (12, 14).

## Revendications

1. Élément d'isolation (16) pour isoler un élément de structure (12, 14) dans un véhicule automobile, l'élément d'isolation (16) comprenant :
un support (11) avec une première paroi (2) et une deuxième paroi (3),
les parois (2, 3) étant conçues et agencées de manière à coïncider sensiblement, et
les parois (2, 3) ayant chacune des premiers bords (4) et des deuxièmes bords (5) opposés, et
avec une première nervure (6) et une deuxième nervure (7),
les nervures (6, 7) étant agencées entre les parois (2, 3), et
les nervures (6, 7) s'étendant chacune entre le premier bord (4) et le deuxième bord (5),
les nervures (6, 7) étant chacune au moins deux fois moins longues qu'une distance totale entre les premiers bords (4) et les deuxièmes bords (5) dans la direction des nervures (6, 7) ;
un matériau expansible (13) qui est agencé entre les parois (2, 3) et qui est agencé de part et d'autre des nervures (6, 7) respectives, et
un élément de fixation (8) pour fixer l'élément d'isolation (16) dans l'élément de structure (12, 14),
l'élément de fixation (8) étant agencé dans une zone des premiers bords (4) des parois (2, 3) ;
les nervures (6, 7) divisant un volume entre les deux parois (2, 3) de telle sorte qu'entre 35% et 65% de ce volume soit situé entre les nervures (6, 7), et
les nervures (6, 7) s'étendant sensiblement jusqu'aux premiers bords (4) des parois (2, 3), mais étant espacées des deuxièmes bords (5) des parois (2, 3) par une distance, cette distance représentant au moins 15% d'une longueur des nervures (6, 7), **caractérisé**
**en ce que** le matériau expansible (13) a un taux d'expansion de 1000% à 4000%, et
**en ce que** respectivement une zone des parois (2, 3) directement au niveau des deuxièmes bords (5) est exempte de matériau expansible (13).

2. Élément d'isolation (16) selon la revendication 1, dans lequel les parois (2, 3) sont sensiblement carrées et/ou rectangulaires et/ou plates.

3. Élément d'isolation (16) selon l'une des revendications précédentes, dans lequel les nervures (6, 7) s'étendent sensiblement orthogonalement aux premiers bords (4) et/ou aux deuxièmes bords (5).

4. Élément d'isolation (16) selon l'une des revendications 1 ou 2, dans lequel les nervures (6, 7) s'étendent selon un angle par rapport à une orthogonale aux premiers bords (4) et/ou aux deuxièmes bords (5), ledit angle étant compris entre 0° et 30° ou entre 5° et 25° ou entre 5° et 20°.

5. Élément d'isolation (16) selon l'une des revendications précédentes, dans lequel les nervures (6, 7) sont chacune au moins 60% ou 70% ou 80% ou 90% aussi longues qu'une distance totale entre les premiers bords (4) et les deuxièmes bords (5) dans la direction des nervures (6, 7).

6. Élément d'isolation (16) selon l'une des revendications précédentes, dans lequel les nervures (6, 7) divisent un volume entre les deux parois (2, 3) de telle sorte qu'entre 40% et 60% de ce volume soit situé entre les nervures (6, 7).

7. Élément d'isolation (16) selon l'une des revendications précédentes, dans lequel le matériau expansible (13) est agencé sur 50% à 95%, ou 60% à 95%, ou 70% à 90% d'une surface de base des parois (2, 3).

8. Élément d'isolation (16) selon l'une des revendications précédentes, dans lequel l'élément de fixation (8) est réalisé sous forme de clip, > et/ou dans lequel l'élément de fixation (8) est réalisé d'une seule pièce avec le support (11).

9. Élément d'isolation (16) selon l'une des revendications précédentes, dans lequel l'élément d'isolation (16) comprend un ou plusieurs éléments d'écartement (9) qui supportent l'élément d'isolation (16) sur l'élément de structure (12, 14) lorsque l'élément d'isolation (16) est fixé sur l'élément de structure (12, 14) par l'élément de fixation (8).

10. Élément d'isolation (16) selon la revendication 9, dans lequel un élément d'écartement (9) est agencé de chaque côté de l'élément de fixation (8), et/ou dans lequel les éléments d'écartement (9) sont flexibles.

11. Système dans un véhicule automobile, le système comprenant :
un élément de structure (12, 14) ayant une cavité ;
et un élément d'isolation (16) selon l'une des revendications 1 à 10 ;
l'élément d'isolation (16) étant agencé dans la cavité de l'élément de structure (12, 14).
